# EUROPEAN PATENT APPLICATION

(11) **EP 0 636 534 A1**
(43) Date of publication of application: **01.02.1995**
(21) Application number: 94870072.9
(22) Date of filing: 27.04.1994
(51) Int. Cl.: B62J 7/04

(54) **Height-adjustable parcel carrier for bicycles etc.**

(30) Priority: 27.04.1993 BE 9300420
(71) Applicant: CURANA, B-8800 Roeselare (BE)
(72) Inventor: Vens, Dirk, B-8800 Roeselare (BE)
(74) Representative: Pieraerts, Jacques

(57) **Abstract**

The application relates to a height-adjustable parcel carrier for bicycles etc., characterized in that clamping means (5,10,11) are provided on said parcel carrier, either for the two and two clamps of the supporting rods (2) connected to each other in form of a bracket und having the desired length, or to clamp a bracket (8), that may connect the parcel carrier with the rear fork (9) at any angle.

## Description

The invention relates to a height-adjustable parcel carrier for bicycles etc.

The invention has for its object the development of a new and original, height-adjustable parcel carrier with the possibility of being adjusted at any time to the correct horizontal position, that may also be the angle the rear fork encloses with the vertical plane. In a measure the conception "horizontal" matches the conception "height-adjustable".

The angle between the vertical plane and the rear fork differs strongly as far as it concerns a lady's or a gentlemen's bicycle. This angle varies also depending on the height of the frame and naturally on the type of bicycle. Therefore this causes problems in connection with the horizontal position of the carrier frame to be mounted to the bicycle.

To that effect solutions have already been proposed and described in two patent applications, namely in the following patents: DE 40 05 009 A1 and EP 0 530 403 A2.

In the case of the parcel carrier according to the DE patent the supporting rods attached to the wheel naves can only be blocked at a well defined angle with respect to the parcel carrier.

In the EP patent a bracket connecting the parcel carrier with the cycle frame is adjustable and can be blocked at various angles. To enable this adjustment, however, tools are required as for instance a key or a screwdriver. Moreover the structure according to the EP application shows the disadvantage of a detachment of the movable connection between the said bracket and the parcel carrier when using the bicycle.

To remedy the drawbacks of the parcel carrier constructed according to the above patents and to give a solution ensuring the required clamping between the various parts without the need of some accessory (key or screwdriver) according to the invention clamping means are provided on said parcel carrier, either for the pair and pair clamps of the supporting rods connected to each other in form of a bracket and having the desired length, or to clamp a bracket, that may connect the parcel carrier with the rear fork at any angle.

In a first embodiment above clamping means for the above supporting rods consist of hooks welded underneath the parcel carrier alternatively directed in the one or the other direction and of transverse rods welded therewith to the parcel carrier, between these hooks and transverse rods clamping being possible of the part of the above bracket extending between two supporting rods.

In a highly remarkable embodiment underneath the parcel carrier channel type clamping means are provided with two parallel walls, in which recesses being provided with such a profile that the recesses of one wall do not match with the recesses of the other wall and do not have a common centre line in such a way that the part of a bracket connecting the parcel carrier with the rear fork of the bicycle respectively a part of the bracket extending between above supporting rods are maintained in a clamped position in two opposite recesses each as an element of the above walls.

Further details und advantages of the invention are explained in the description of a height-adjustable parcel carrier according to the invention. This description serves only as an example and does not in any way limit the invention. The reference numbers refer to the attached drawings.

Fig. 1 shows a side elevation of the parcel carrier according to the invention in a first embodiment.

Fig. 2 shows the parcel carrier according to the invention in a second embodiment.

Fig. 3 shows in an enlargement a detail of the parcel carrier of Fig. 1.

Fig. 4 is a bottom view of a part of the parcel carrier of Fig. 2.

Fig. 5 shows a channel type clamping means of the type in Fig. 3 for fixation of supporting rods.

The figures clearly illustrate two possible embodiments. Based on the same elements both for the frame of the parcel carrier and for its own structure numerous variants are imagineable, as a consequence of which the described example should not be considered being limited in any way.

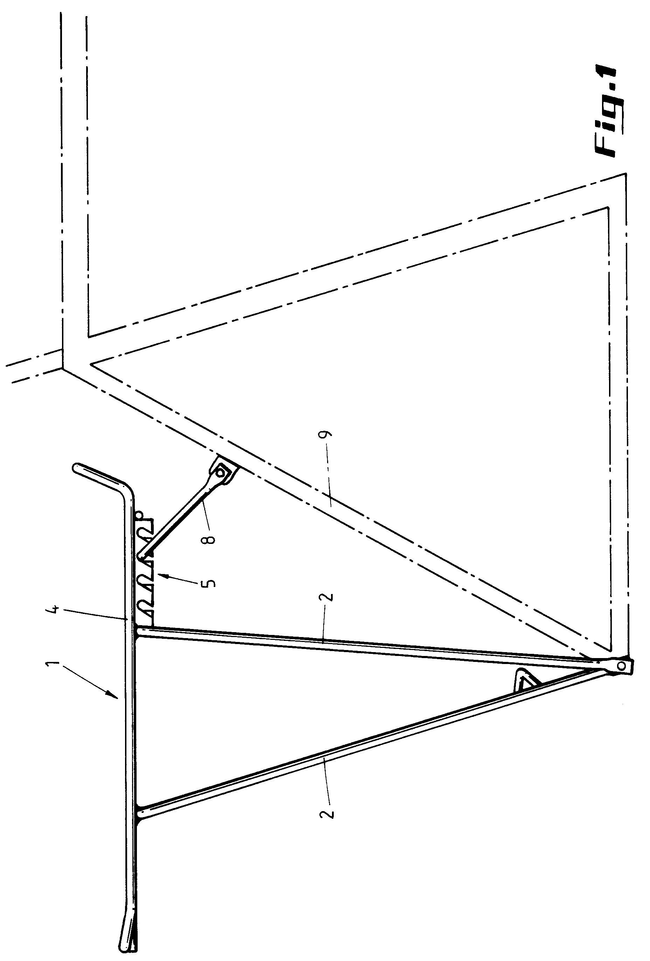

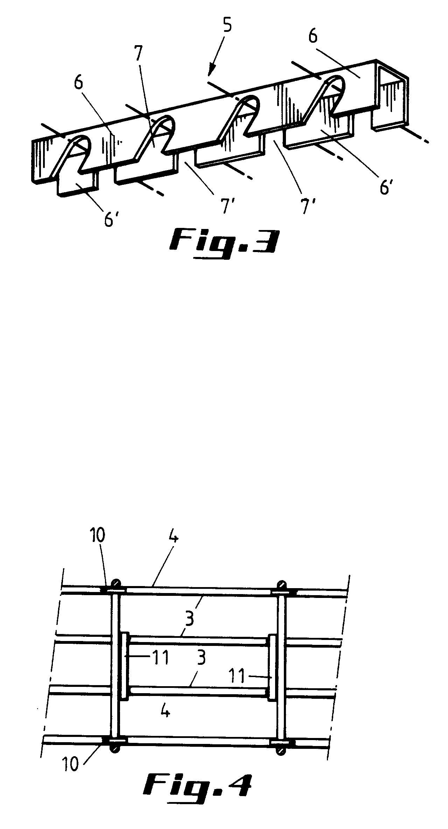

The parcel carrier of Fig. 1, 3 and 5 consists of a frame 1 and two bracket type converted rods 2. In the parcel carrier of Figs. 1, 2, 4 and 5 frame 1 of the parcel carrier consists of longitudinal rods that can be subdivided in inner rods 3 and external rods 4. These longitudinal rods are clearly visible from Fig. 4.

In the embodiment of Fig. 1 clamping means 5 are welded to each two longitudinal rods, preferably the inner longitudinal rods 3. Said clamping means are shown with further details in Fig. 3.

The clamping means shown in the alternative of Fig. 1 and in the enlargement of Fig. 3 are channel type clamping means with two parallel walls 6 and 6' provided with recesses 7 and 7'.

The recesses 7 and 7' show such a profile, that the recesses 7 of the wall 6 are not coinciding with the recesses 7' of the other wall 6'. Moreover they have no common centre line in such a way, that the part of the bracket 8 connecting the parcel carrier with the rear fork 9 of the bicycle is kept in a clamped position in each two opposite recesses 7 and 7' as part of each of the above walls 6 and 6'.

As the angle between the rear fork 9 of a bicycle with the vertical plane differs as far as it concerns a lady's or a gentlemen's bicycle, according to the invention it is possible to move that part of the bracket 8 clamped in the recesses 7 and 7' of the walls 6 and 6' into the one or other of these recesses provided in pairs and to keep them in its clamped condition.

From Fig. 3 it is obvious, that the recesses 7 in the wall 6 have an oblique course with respect to the transverse plane through the channel type clamping means 5, whereas the recess 7' extends perpendicular to the bottom of the channel type clamping means.

It also can be deducted from Fig. 1, that the bracket 8 can penetrate into these recesses provided in pairs from the two channel type clamping means being welded to the left and the right side on one of the inner longitudinal rods 3, so that this part of the bracket 8 and therefore the bracket itself cannot be removed without more. To enable this the bracket 8 had first to be unscrewed with respect to the rear fork 9 of the bicycle.

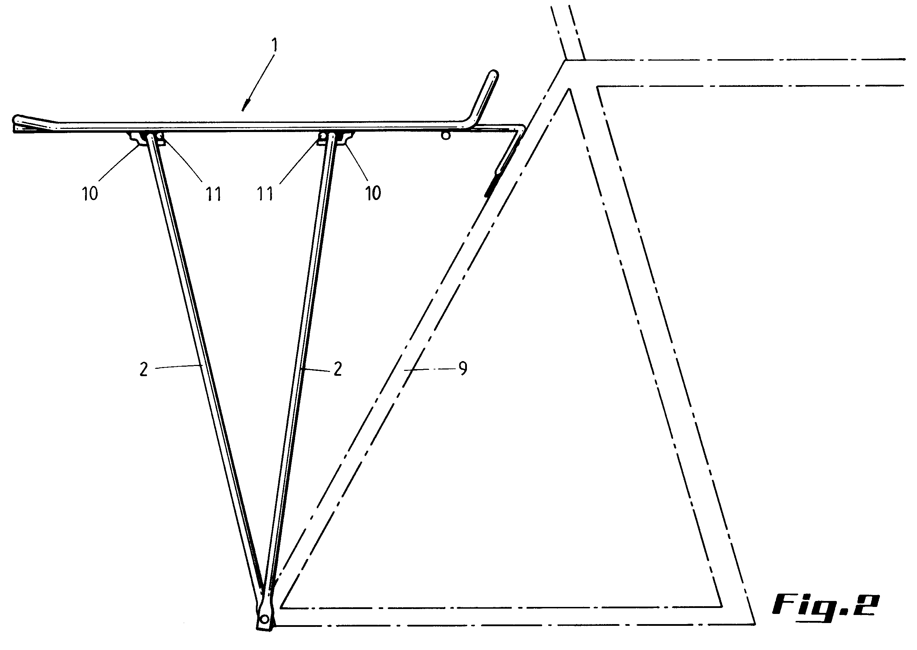

The embodiment of Figs. 2 and 4 is in a measure based on the same principle. To some of the longitudinal rods of frame 1 of the parcel carrier pair and pair facing hooks 10 are welded. Hooks 10 are also visible in the bottom view of Fig. 4. By welding to the inner longitudinal rods 3 of the frame 1 of the parcel carrier each two cooperating rods 11 with a set of two hooks the part connecting the bracket type supporting rods 2 can be held in a blocked position between one of the rods 11 and the hooks 10 cooperating with them. In principle the same hooks 10 could be welded also to the inner longitudinal rods 3, enabling to keep this part of the bracket type supporting rod between two of these groups of two opposed hooks 10 in a blocked position.

When the embodiment of Figs. 2 and 4 is applied, the horizontal position of the parcel carrier is ensured by the choice of the correct length of supporting rods 2.

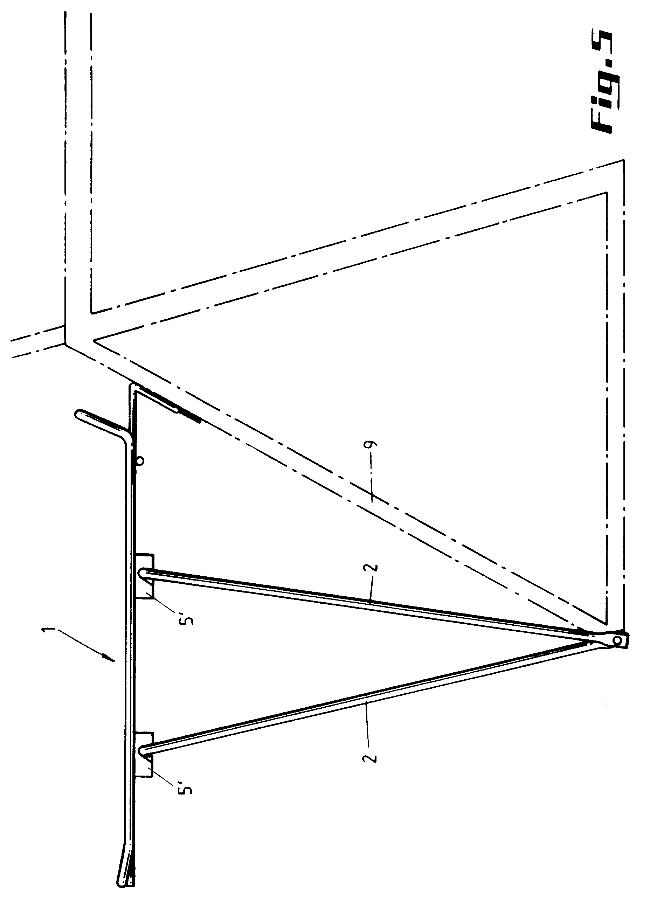

Exchanging supporting rods 2 is also easy by using shorter clamping means 5' (Fig. 5), in which the horizontal part of the bracket in use formed by each two supporting rods 2 can be kept in a clamped position.

The invention is of course not limited by the examples of the embodiments and many alterations could be introduced without leaving the scope of the claims.

## Claims

1. A height-adjustable parcel carrier for bicycles etc., characterized in that clamping means are provided on said parcel carrier, either for the pair and pair clamps of the supporting rods connected to each other in form of a bracket und having the desired length, or to clamp a bracket, that may connect the parcel carrier with the rear fork at any angle.

2. A parcel carrier as claimed in claim 1, characterized in that above clamping means for the above supporting rods consist of hooks welded underneath the parcel carrier alternatively directed in the one or the other direction and of transverse rods welded therewith to the parcel carrier, between these hooks and transverse rods clamping the part of the above bracket extending between two supporting rods being possible.

3. A parcel carrier as claimed in claim 1, characterized in that above clamping means consist of hooks provided underneath the above parcel carrier alternatively directed in the one or other direction, and in that between them the part of the above bracket extending between two supporting rods can be clamped.

4. A parcel carrier as claimed in claim 1, characterized in that underneath the parcel carrier channel type clamping means are provided with two parallel walls, in which recesses are provided having such a profile that the recesses of one wall do not match with the recesses of the other wall and do not have a common centre line in such a way that the part of a bracket connecting the parcel carrier with the rear fork of the bicycle respectively a part of the bracket extending between above supporting rods are kept in a clamped position in two opposite recesses each as an element of the above walls.

5. A parcel carrier as claimed in claim 4, characterized in that the recesses in a wall are hooked and extend at a nonright angle with respect tot the longitudinal axis of said channel, whereas the recesses in the other wall extend perpendicularly to this longitudinal axis.

6. A parcel carrier as claimed in claim 4, characterized in that the recesses in both walls are hooked and extend in each wall at a nonright angle, the recesses in one wall extending in one direction and the recesses in the other wall extending in the opposite direction.
